# EUROPÄISCHE PATENTSCHRIFT

(11) **EP 0 199 343 B1**
(45) Veröffentlichungstag und Bekanntmachung des Hinweises auf die Patenterteilung: **02.02.1994**
(21) Anmeldenummer: 86105558.0
(22) Anmeldetag: 22.04.1986
(51) Int. Cl.: G02B 21/34, G01N 33/53, C12G 1/00

(54) **Verfahren zur Herstellung von Objektträgern mit abgegrenzten Reaktionsfeldern und die dabei erhaltenen Objektträger**
Method for producing microscope slides with delimited reactive fields, and slides made according to the method
Méthode de fabrication de lames de microscopes avec des zones réactives délimitées et lames ainsi produites

(30) Priorität: 26.04.1985 DE 3515160
(43) Veröffentlichungstag der Anmeldung: 29.10.1986
(73) Patentinhaber: Paul Marienfeld KG, D-97980 Bad Mergentheim (DE)
(72) Erfinder: Bross, Klaus J., Dr. med., D-7800 Freiburg i. Br. (DE)
(74) Vertreter: TER MEER STEINMEISTER & PARTNER GbR

(56) Entgegenhaltungen:
- EP-A- 0 018 435
- DE-A- 2 508 176
- DE-A- 2 541 031
- US-A- 3 736 042

## Beschreibung

Gegenstand der Erfindung ist ein Verfahren zur Herstellung von Objektträgern mit einem oder mehreren von einer hydrophoben Oberflächenbeschichtung umgebenen Reaktionsfeldern, die zur Fixierung der zu untersuchenden Präparate mit dafür affinen Substanzen beschichtet sind, durch
a. Abdecken der Bereiche mindestens einer Oberfläche des Objektträgers, die den zu bildenden Reaktionsfeldern entsprechen, mit einem wiederentfernbaren Material,
b. Beschichten der gesamten Oberfläche des in dieser Weise behandelten Objektträgers mit einem hydrophoben Material,
c. Freilegen der Reaktionsfelder durch Entfernen des abdeckenden Materials und
d. Beschichten der freigelegten Reaktionsfelder mit der für die zu untersuchenden Präparate affinen Substanz.

Zum Nachweis von Antigenen auf Zellen sind in der Literatur zahlreiche Methoden beschrieben worden. Ihr Prinzip beruht auf der Sichtbarmachung der Reaktion der Antigene mit den entsprechenden Antikörpern durch Fluoreszenz, Goldpartikel oder eine Farbstoffentwicklung durch Enzyme. Dabei werden in der Regel die Reaktionsschritte an suspendierten Zellen durchgeführt. Die Auswertung erfolgt danach mit Hilfe von Durchflußmeßgeräten oder nach der Überführung der umgesetzten Zellen auf einen Objektträger mittels Mikroskop.

Es ist auch bereits beschrieben worden, die für diese Nachweismethoden eingesetzten Zellen an der Objektträgeroberfläche zu fixieren, beispielsweise dadurch, daß abgegrenzte Reaktionsfelder erzeugt werden, die in der Lage sind, die zu untersuchenden Präparate, wie Zellen, festzulegen. Hierdurch wird es möglich, mehrere Behandlungsschritte in einfacher Weise und unter Anwendung unterschiedlicher flüssiger Medien durchzuführen und auch die erhaltenen Präparate in einfache Weise zu archivieren.

So ist es bekannt, die Oberfläche eines Objektträgers mit einer Kunststoffolle zu bedecken, in die eines oder mehrere Reaktionsfelder eingestanzt sind. Die durch diese Löcher in der Kunststoffolie freigelassene Objektträgeroberfläche wird dann mit einer Substanz beschichtet, die in der Lage ist, die zu untersuchenden Präparate zu fixieren, beispielsweise mit PolyL-lysin (Transplantation, Vol. 25, No. 6(1978), Seiten 331 bis 334). Es ist weiterhin bekannt, mit Reaktionsfeldern versehene Objektträger dadurch herzustellen, daß man die Objektträgeroberfläche zunächst vollflächig mit einem wasserabstoßenden Mittel beschichtet und dieses dann an den Reaktionsfeldern dadurch beseitigt, daß man konzentrierte Schwefelsäure und anschließend einen Tropfen 50%-iger Natriumhydroxidlösung auftropft (Transplantation, Vol. 28, No. 3(1979), Selten 257 bis 259). Auch in diesem Fall wird die freigelegte Glasoberfläche der Reaktionsfelder mit Poly-L-lysin beschichtet, um hierdurch die Fixierung von lebensfähigen Zellen, beispielsweise roten Blutkörperchen, zu ermöglichen.

Diese Objektträger erlauben die Verankerung der zu behandelnden Zellen, was einen erheblichen Fortschritt gegenüber den zuvor bekannten Methoden mit suspendierten Zellen darstellt. Insbesondere ergibt sich eine einfachere Handhabung bei zahlreichen Untersuchungen, so daß Inkubationen und Waschungen in einfacher Weise und ohne Zentrifugieren durchgeführt werden können.

Die vorbekannten Objektträger mit Reaktionsfeldern vermögen aber nicht vollständig zu befriedigen, einerseits im Hinblick auf ihre flüssigkeitsabstoßende Wirkung der die Reaktionsfelder umgebenden Bereiche und andererseits im Hinblick auf die Fixierung der zu untersuchenden Präparate, insbesondere Zellen, auf der eigentlichen Oberfläche der Reaktionsfelder.

Aus der US-PS-3 736 042 ist ein Objektträger auf Glasgrundlage mit abgegrenzten Reaktionsfeldern bekannt, die mit einer für die zu untersuchenden Präparate affinen Substanz beschichtet sein können. Zur Herstellung ist angegeben, daß zunächst eine Maske auf die Oberfläche des Glassubstrats aufgebracht und dann die Oberfläche mit einer Teflonschicht besprüht werden.

Gegenstand der EP-A-0 018 435 ist ein Mikroanalysensystem mit zwei Platten, die aufje einer Fläche mit einer Schicht versehen sind, die sich gegenüberliegende Reaktionsfelder freiläßt, welche Schicht inert ist und so beschaffen, daß sie das Lösungsmittel des Reaktionsgemisches weniger anzieht als die frei gebliebenen Reaktionsfelder es tun oder daß nur eine dieser Platten so beschichtet ist, während die andere von vornherein aus einem Stoff besteht, der das Lösungsmittel des Reaktionsgemisches abweist. Bei der Herstellung werden diese Platten mit einer wasserabstoßenden Schicht versehen, die eine Anzahl Kreisflächen freiläßt, was beispielsweise in der Weise erfolgt, daß mit einem Gummistempel eine Schicht warmen, flüssigen Fetts auf die den Reaktionsfeldern entsprechenden Bereiche aufgebracht wird, wonach das in dieser Weise vorbehandelte Material mit einer Lösung besprüht wird, die beispielsweise Polytetrafluorethylen enthält, wonach das Fett heiß abgewaschen wird.

Die Aufgabe der vorliegenden Erfindung besteht nun darin, ein Verfahren der eingangs beschriebenen Gattung anzugeben, mit dem es gelingt, in einfacher und kostengünstiger Weise Objektträger herzustellen, die gegenüber den herkömmlichen Produkten dieser Art in ihrer Differenzierung zwischen dem abstoßenden Bereich und dem affinen Bereich für die zu untersuchenden biologischen Präparate verbessert sind.

Diese Aufgabe wird nun gelöst durch die kennzeichnenden Merkmale des Verfahrens gemäß Hauptanspruch. Die Unteransprüche betreffen besonders bevorzugte Ausführungsformen dieses Erfindungsgegenstandes.

Gegenstand der Erfindung ist somit ein Verfahren zur Herstellung von Objektträgern mit einem oder mehreren von einer hydrophoben Oberflächenbeschichtung umgebenen Reaktionsfeldern, die zur Fixierung der zu untersuchenden Präparate mit dafür affinen Substanzen beschichtet sind, durch
(a) Abdecken der Bereiche mindestens einer Oberfläche des Objektträgers, die den zu bildenden Reaktionsfeldern entsprechen, mit einem wiederentfernbaren Material,
(b) Beschichten der gesamten Oberfläche des in dieser Weise behandelten Objektträgers mit einem hydrophoben Material,
(c) Freilegen der Reaktionsfelder durch Entfernen des abdeckenden Materials und
(d) Beschichten der freigelegten Reaktionsfelder mit der für die zu untersuchenden Präparate affinen Substanz, das dadurch gekennzeichnet ist, daß man die den Reaktionsfeldern entsprechenden Bereiche mit einer oder mehreren, an der Oberfläche des Objektträgers anhaftenden, wiederentfernbaren, wasserlöslichen und in in organischen Lösungsmitteln unlöslichen makromolekularen Verbindung(en) abdeckt.

Bei dem erfindungsgemäßen Verfahren verwendet man in der Stufe (a) als Material zur Abdeckung der den zu bildenden Reaktionsfeldern entsprechenden Bereiche eine wiederentfernbare, wasserlösliche und in organischen Lösungsmitteln unlösliche makromolekulare Verbindung, die sich nach der anschließenden Behandlung in der Stufe (b) leicht ohne Rückstand von der Objektträgeroberfläche wieder entfernen läßt und die letztlich gebildeten Reaktionsfelder definiert. Diese Reaktionsfelder können nach Zahl und Größe und auch Position auf dem Objektträger variieren, wie es bereits für herkömmliche Objektträger mit aufgedruckten Standardmasken üblich ist.

Im Anschluß an das Abdecken der den zu bildenden Reaktionsfeldern entsprechenden Bereiche mit Hilfe der definierten makromolekularen Verbindung wird die gesamte Oberfläche des Objektträgers einschließlich der abgedeckten Bereiche mit einem hydrophoben Material beschichtet, welches Wasser und wäßrige Medien abstößt und damit die erforderliche Abgrenzung der Reaktionsfelder untereinander sicherstellt. Durch das Abdecken der den Reaktionsfeldern entsprechenden Bereiche mit der makromolekularen Verbindung erfolgt eine Abschirmung der Objektträgeroberfläche von den weiteren Behandlungsmedien und damit eine wesentliche Verbesserung der Eigenschaften der eigentlichen Reaktionsfelder, wodurch sich eine bessere Fixierung der zu untersuchenden Präparate an der Objektträgeroberfläche im Bereich der Reaktionsfelder erzielen läßt.

Erfindungsgemäß verwendet man bevorzugt als makromolekulare Verbindung zur Abdeckung der den Reaktionsfeldern entsprechenden Bereiche eine oder mehrere alkoholunlösliche makromolekulare Verbindungen, wie beispielsweise Gummi arabicum, ein Dextran, Hydroxyethylcellulose oder ein gut lösliches Polysaccharid, wobei man auch Mischungen dieser Produkte einsetzen kann.

Als hydrophobes Material, mit dem man die gesamte Oberfläche des Objektträgers einschließlich der den Reaktionsfeldern entsprechenden, abgedeckten Bereiche bedeckt, verwendet man ein Material, welches sich in Form einer Lösung in einem Lösungsmittel aufbringen läßt, welches das abdeckende Material nicht löst oder angreift. Mit besonderem Vorteil verwendet man in Kombination mit der als abdeckendes Material verwendeten, in Wasser löslichen und in Alkoholen unlöslichen makromolekularen Verbindung der oben angesprochenen Art hydrophobe Verbindungen, die in Alkohol löslich und in wäßrigen Medien unlöslich sind, wie beispielsweise siliciumorganische Trennmittel, wie Siliconöle (Siliclad® und Repelco®) oder Polyorganosiloxane. Mit besonderem Vorteil verwendet man hierfür eine Lösung eines Polyorganosiloxans in einem Propanol/Schwefelsäure-Gemisch, da sich hierdurch eine bessere Verbindung des Polyorganosiloxans mit der Objektträgeroberfläche erzielen läßt, namentlich dann, wenn der Objektträger aus Glas besteht.

Es sei an dieser Stelle angemerkt, daß es erfindungsgemäß ohne weiteres möglich ist, Objektträger aus Kunststoffmaterialien, wie Polymethylmethacrylat oder Polycarbonat, einzusetzen, wenngleich Glasobjektträger besonders bevorzugt sind. Mit Vorteil arbeitet man mit Objektträgern mit einem Mattglasrand, der die Möglichkeit der Beschriftung gibt. Durch Aufbringen eines Deckglases und Versiegeln wird eine Konservierung der Präparate möglich.

Nach dem Aufbringen der hydrophoben Verbindung in Form einer Schicht auf der gesamten Objektträgeroberfläche einschließlich der abgedeckten Bereiche, die den zu bildenden Reaktionsfeldern entsprechen, was dadurch erreicht wird, daß man eine Lösung dieser hydrophoben Verbindung aufträgt und dann das Lösungsmittel verdampft, legt man die Reaktionsfelder durch Abheben der anhaftenden, wiemakromolekularen Verbindung(en) frei. Dies kann dadurch erreicht werden, daß man ein Lösungsmittel verwendet, welches zwar die makromolekulare Verbindung(en) zu lösen vermag, jedoch die hydrophobe Verbindung, die den Bereich um die Reaktionsfelder herum abdeckt, nicht angreift. Mit Vorteil setzt man für diesen letzteren Fall ein wäßriges basisches Lösungsmittelmedium ein, wofür insbesondere oberflächenaktive basische Reinigungsmittel für Laborgeräte geeignet sind, namentlich das biologisch abbaubare, im Handel erhältliche Material Extran®. Durch diese Behandlung wird lediglich die makromolekulare Verbindung mit der darauf vorliegenden hydrophoben Beschichtung entfernt, was zur Folge hat, daß im Bereich der Reaktionsfelder die Objektträgeroberfläche freigelegt wird. Mit besonderem Vorteil wird erfindungsgemäß die freigelegte Objektträgeroberfläche mit einem alkalischen Mittel, wie mit einem Alkalimetallhydroxid oder Erdalkalimetallhydroxid, namentlich Natriumhydroxid, behandelt. Auch durch leichtes Reiben der Objektträgeroberfläche mit dem basischen Reinigungsmittel kann diese Behandlung erfolgen, die bewirkt, daß die Objektträgeroberfläche alkalisch gemacht wird, was namentlich für Objektträger aus Glas von Vorteil ist.

Im Anschluß an diese Behandlungsmaßnahmen werden dann die freigelegten und gegebenenfalls mit dem alkalischen Mittel behandelten Reaktionsfelder in an sich bekannter Weise mit einer oder mehreren Substanzen beschichtet, die eine Affinität für die zu untersuchenden Präparate besitzen, d. h., die zu untersuchenden biologischen Präparate, wie Zellen und dergleichen, an der Objektträgeroberfläche zu fixieren vermögen. Hierfür haben sich Substanzen geeignet, die zum einen an der Glasoberfläche haften und zum anderen Zellen oder Proteine binden können, wie einerseits basische Substanzen, wie basische Proteine oder basische Farbstoffe, wie Poly-L-lysin, Spermidin, Poly-arginin, Alcianblau (Serva SG8), die die Zellen aufgrund ihrer negativen (sauren) Ladung der Zelloberfläche binden, wodurch alle Zellarten erfaßt werden, und andererseits Substanzen, die mit bestimmten Molekülen der Zelloberfläche zu reagieren vermögen, wie beispielsweise Antikörper, namentlich solche, die für bestimmte Zellmembranantigene spezifisch sind. Diese letztere Methode ist in der Literatur als Panning-Technik bekannt und dient zur Isolierung bestimmter Zelltypen. In diesem letzteren Fall wird das mit einer basischen Substanz, vorzugsweise Alcianblau, ein basischer Farbstoff, der in der Pathologie zur Anfärbung von sauren Substanzen benutzt wird, auf die Reaktionsfelder aufgebracht, wonach auf die in dieser Weise beschichtete Oberfläche die in Rede stehenden Antikörper aufgetragen werden. Die noch vorliegenden freien Valenzen des Alcianblau werden anschließend mit indifferenten Proteinen (Albumin, Gelatine, etc.) abgebunden, um eine unspezifische Reaktion der zu untersuchenden Zellen zu vermeiden. Neben Alcianblau kann man auch andere basische Farbstoffe einsetzen, die einerseits an der Glasoberfläche anhaften und andererseits in der Lage sind, negativ geladene Zellen an sich und damit an die Objektträgeroberfläche zu binden.

Die erfindungsgemäß eingesetzten, für die zu untersuchenden Präparate affinen Substanzen lassen sich ohne weiteres aus wäßrigen Medien auf die Objektträger aufbringen, wobei durch die aufgebrachte hydrophobe Oberflächenbeschichtung verhindert wird, daß diese affinen Substanzen auch auf die nicht den Reaktionsfeldern entsprechenden Oberflächenbereiche festgelegt werden.

Durch die erfindungsgemäße Abfolge der Verfahrensmaßnahmen wird eine besonders starke Fixierung dieser Substanzen mit Affinität für die zu untersuchenden biologischen Präparate erreicht, was eine wesentliche Verbesserung der Analysenmethoden unter Anwendung dieser Objektträger ermöglicht, da ohne Störung noch mehr Verfahrensschritte und Reaktionsabläufe durchgeführt werden können und Störungen vermieden werden.

Erfindungsgemäß ist es weiterhin möglich, eine noch weitere Verbesserung dieses vorteilhaften Effekts zu erreichen, sei es dadurch, daß die Bindung der für die zu untersuchenden Präparate affinen Substanzen an der Objektträgeroberfläche durch chemische Bindung begünstigt wird und/oder daß man durch mehrfaches Aufbringen eine dickere Schicht dieser Materialien erzeugt.

Mit Hilfe der erfindungsgemäß hergestellten Objektträger wird eine wesentlich stärkere Bindung der zu untersuchenden biologischen Präparate an der Objektträgeroberfläche erreicht und aufgrund der stark hydrophoben Bereiche, die die eigentlichen Reaktionsfelder umgeben, ein Ineinanderlaufen der verschiedenen Präparate verhindert. Gegenstand der Erfindung sind daher auch die nach dem erfindungsgemäßen Verfahren erhältlichen Objektträger, die für zahlreiche Untersuchungen eingesetzt werden können, nämlich:
(1) Für morphologische Untersuchungen von Zellen nach Fixierung und Färbung analog der normalen Ausstrichtechniken und Cytozentrifugation.
(2) Inkubation der Zellen mit verschiedenen Antikörpern gegen Zellmembranantigene zur Charakterisierung bestimmter Zellpopulationen mit nachfolgender Sichtbarmachung der Reaktion durch Antikörpermarkierung mit Enzymen (Peroxidase), Fluoreszenzfarbstoffen oder Goldpartikeln.
(3) Nachweis von intrazellulären Antigenen durch markierte Antikörper nach Trocknung und Fixierung der Zellen (antinucleare Antikörper).
(4) Reaktionsnachweis der Zellen mit
   (a) Partikeln wie Bakterien, Latexteilchen, Acrylteilchen etc.
   (b) Substanzen wie Farbstoffen, Toxinen, Lectinen etc.
(5) Durchführung cytochemischer Reaktionen zum Nachweis zellulärer Enzyme, wie Peroxidase, Esterase, saurer Phosphatase, etc.
(6) Einbettung von Einzelzellen für die Elektronenmikroskopie.
(7) Auftragen und Bearbeitung von Gewebeschnitten für pathologische Untersuchungen.
(8) Einfrieren von Zellen auf dem Objektträger für spätere Untersuchungen oder Versand.

Das folgende Beispiel dient der weiteren Erläuterung der Erfindung.

### Beispiel

Man verwendet einen Mattglasrandobjektträger, auf den eine wäßrige Lösung von Gummi arabicum in der Weise aufgetragen wird, daß sich zwölf runde Reaktionsfelder mit einem Durchmesser von ca. 4 mm ergeben. Dann läßt man die Lösung eintrocknen, wonach die gesamte Objektträgeroberfläche mit Ausnahme des matten Randes mit einer Polysiloxan/Propanol-Schwefelsäurelösung bestrichen wird. Nach dem Eintrocknen dieser Siliconlösung werden mit Hilfe eines alkalischen biologisch abbaubaren Reinigungsmittels (Extran®) die Reaktionsfelder wieder freigelegt, worauf durch leichtes Reiben mit dieser Lösung oder mit einer Natriumhydroxidlösung die Glasoberfläche alkalisch gemacht wird. Nach dem Abwaschen mit destilliertem Wasser werden die freigelegten Reaktionsfelder mit einem basischen Farbstoff (Alcianblau (Serva SG8)) beschichtet. Die aufgebrachte Lösung wird nach einer Einwirkungszeit von ca. 5 bis 15 Minuten oder länger mit isotonischer Pufferlösung entfernt.

Jetzt ist der Objektträger zur Aufnahme der Zellsuspension bereit. Nach dem Auftragen der Zellsuspension läßt man die Zellen während einer Zeitdauer von ca. 15 Minuten absitzen. Hierdurch werden die Zellen an der Oberfläche der Reaktionsfelder fixiert, wobei sich der überraschende Effekt ergibt, daß die Zellen flach auf der Objektträgeroberfläche gebunden werden, so daß sie für die Mikroskopie in einer Tiefenebene liegen. Nach der Fixierung der Zellen können diese in verschiedenartigster Weise nachbehandelt werden.

Zur Konservierung des Endpräparats wird dieses dann mit Glycerin beschichtet und mit einem Deckglas abgeschlossen. Die Seiten des Deckglases werden dann mit einem Klebstoff (Nagellack) luftdicht verschlossen.

## Patentansprüche

1. Verfahren zur Herstellung von Objektträgern mit einem oder mehreren von einer hydrophoben Oberflächenbeschichtung umgebenen Reaktionsfeldern, die zur Fixierung der zu untersuchenden Präparate mit dafür affinen Substanzen beschichtet sind, durch
(a) Abdecken der Bereiche mindestens einer Oberfläche des Objektträgers, die den zu bildenden Reaktionsfeldern entsprechen, mit einem wiederentfernbaren Material,
(b) Beschichten der gesamten Oberfläche des in dieser Weise behandelten Objektträgers mit einem hydrophoben Material,
(c) Freilegen der Reaktionsfelder durch Entfernen des abdeckenden Materials und
(d) Beschichten der freigelegten Reaktionsfelder mit der für die zu untersuchenden Präparate affinen Substanz, **dadurch gekennzeichnet**, daß man die den Reaktionsfeldern entsprechenden Bereiche mit einer oder mehreren, an der Oberfläche des Objektträgers anhaftenden, wiederentfernbaren, wasserlöslichen und in in organischen Lösungsmitteln dagegen unlöslichen makromolekularen Verbindung(en) abdeckt.

2. Verfahren nach Anspruch 1, **dadurch gekennzeichnet**, daß man für Schritt (a) eine in organischen Lösungsmitteln unlösliche makromolekulare Verbindung in wäßriger Lösung und für Schritt (b) ein in wäßrigen Medien unlösliches hydrophobes Material in einem organischen Lösungsmittel einsetzt.

3. Verfahren nach den Ansprüchen 1 oder 2, **dadurch gekennzeichnet**, daß man eine oder mehrere alkoholunlösliche makromolekulare Verbindungen für Schritt (a) verwendet.

4. Verfahren nach Anspruch 3, **dadurch gekennzeichnet**, daß man als alkoholunlösliche makromolekulare Verbindung Gummi arabicum, ein Dextran, Hydroxyethylstärke, in wäßrigen Medien lösliche Polysaccharide oder Mischungen davon verwendet.

5. Verfahren nach Anspruch 1 oder 2, **dadurch gekennzeichnet**, daß man für Schritt (b) ein alkohollösliches und in wäßrigen Medien unlösliches hydrophobes Material verwendet.

6. Verfahren nach Anspruch 5**, dadurch gekennzeichnet**, daß man als alkohollösliches hydrophobes Material ein Polyorganosiloxan einsetzt.

7. Verfahren nach Anspruch 6, **dadurch gekennzeichnet**, daß man eine Lösung eines Polyorganosiloxans in einem Propanol/Schwefelsäure-Gemisch verwendet.

8. Verfahren nach Anspruch 2, **dadurch gekennzeichnet**, daß man die Reaktionsfelder mit einem wäßrigen Lösungsmittelmedium freilegt.

9. Verfahren nach Anspruch 8, **dadurch gekennzeichnet**, daß man als wäßriges Lösungsmittelmedium ein wäßriges, basisches Reinigungsmittel einsetzt.

10. Verfahren nach einem der vorhergehenden Ansprüche, **dadurch gekennzeichnet**, daß man die Oberfläche der freigelegten Reaktionsfelder mit einem alkalischen Mittel, wie einem Alkalimetallhydroxid und/oder einem Erdalkalimetallhydroxid, behandelt.

11. Verfahren nach einem der vorhergehenden Ansprüche, **dadurch gekennzeichnet**, daß man die freigelegten und gegebenenfalls mit einem alkalischen Mittel behandelten Reaktionsfelder in an sich bekannter Weise mit einer oder mehreren, für die zu untersuchenden Präparate affinen Substanzen beschichtet.

12. Verfahren nach Anspruch 11, **dadurch gekennzeichnet**, daß man als für die zu untersuchenden Präparate affine Substanz basische Proteine und/oder basische Farbstoffe und/oder an sich bekannte, mit Molekülen der Zelloberfläche reagierende Substanzen, wie Antikörper, verwendet.

13. Verfahren nach Anspruch 12, **dadurch gekennzeichnet**, daß man als für die zu untersuchenden Präparate affinen Substanzen Poly-L-lysin, Spermidin, Poly-arginin, Alcian-Blau oder Mischungen dieser Substanzen verwendet.

14. Verfahren nach einem der vorhergehenden Ansprüche, **dadurch gekennzeichnet**, daß man Objektträger aus Glas oder Kunststoff einsetzt.

15. Verfahren nach einem der vorhergehenden Ansprüche, **dadurch gekennzeichnet**, daß man die Haftung der für die zu untersuchenden Präparate affinen Substanz an der Objektträgeroberfläche durch chemische Bindung begünstigt und/oder durch mehrfaches Auftragen eine dickere Schicht dieser affinen Substanzen ausbildet.

## Claims

1. Process for the production of slides with one or more reaction fields, which are bounded by a hydrophobic surface coating and which, for the fixation of the preparations to be examined, are coated with substances having an affinity therefor, by
(a) covering the regions of at least one surface of the slide, which correspond to the reaction fields to be formed, with a material which is removable again,
(b) coating the entire surface of the slide treated in this manner with a hydrophobic material,
(c) exposing the reaction fields by removal of the covering material, and
(d) coating the exposed reaction fields with the substance having an affinity for the preparations to be examined, characterized in that the areas corresponding to the reaction fields are covered with one or more macromolecular compounds which are soluble in water and, on the other hand, insoluble in in [sic] organic solvents, adhere to the surface of the slide and can be removed again.

2. Process according to Claim 1, characterized in that use is made for step (a) of a macromolecular compound in aqueous solution, such compound being insoluble in organic solvents, and for step (b) of a hydrophobic material in an organic solvent, such hydrophobic material being insoluble in aqueous media.

3. Process according to Claims 1 or 2, characterized in that use is made for step (a) of one or more alcohol-insoluble macromolecular compounds.

4. Process according to Claim 3, characterized in that gum arabic, a dextran, hydroxyethyl starch, polysaccharides soluble in aqueous media or mixtures thereof are used as alcohol-insoluble macromolecular compound.

5. Process according to Claim 1 or 2, characterized in that a hydrophobic material which is soluble in alcohol and insoluble in aqueous media is used.

6. Process according to Claim 5, characterized in that a polyorganosiloxane is employed as hydrophobic material soluble in alcohol.

7. Process according to Claim 6, characterized in that a solution of a polyorganosiloxane in a propanol/sulphuric acid mixture is employed.

8. Process according to Claim 2, characterized in that the reaction fields are exposed with an aqueous solvent medium.

9. Process according to Claim 8, characterized in that an aqueous, basic detergent is used as aqueous solvent medium.

10. Process according to one of the preceding claims, characterized in that the surface of the exposed reaction fields are treated with an alkaline agent, such as an alkali metal hydroxide and/or an alkaline earth metal hydroxide.

11. Process according to one of the preceding claims, characterized in that the reaction fields, which are exposed and possibly treated with an alkaline medium, are coated, in a manner known per se, with one or more substances having an affinity for the preparations to be examined.

12. Process according to Claim 11, characterized in that basic proteins and/or basic dyes and/or substances which are known per se and which react with molecules of the cell surface, such as antibodies, are used as substance having an affinity for the preparations to be examined.

13. Process according to Claim 12, characterized in that poly-L-lysine, spermidine, polyarginine, Alcian Blue or mixtures of these substances are used as substances having an affinity for the preparations to be examined.

14. Process according to one of the preceding claims, characterized in that slides of glass or plastic material are employed.

15. Process according to one of the preceding claims, characterized in that the adhesion of the substance having an affinity for the preparations to be examined at the slide surface is promoted by chemical bonding and/or a thicker layer of these substances having an affinity is produced by multiple application.

## Revendications

1. Procédé pour fabriquer des porte-objets possédant un ou plusieurs champs de réaction entourés d'un revêtement superficiel hydrophobe, qui, pour la fixation des préparations à étudier, sont revêtus de substances possédant une affinité pour ces dernières, ce procédé opérant par :
a) recouvrement des régions d'au moins une surface du porte-objet qui correspondent aux champs de réaction à former avec un matériau pouvant être de nouveau enlevé,
b) revêtement de la totalité de la surface du porte-objet traité de cette façon avec un matériau hydrophobe,
c) dégagement des champs de réaction par enlèvement de la matière recouvrante, et
d) revêtement des champs de réaction ainsi dégagés avec la substance possédant de l'affinité pour les préparations à étudier, qui est caractérisé en ce qu'on recouvre les régions qui correspondent aux champs de réaction avec un ou plusieurs composés macromoléculaires, solubles dans l'eau et au contraire insolubles dans les solvants organiques, qui adhèrent à la surface du porte-objet et peuvent en être de nouveau enlevés.

2. Procédé selon la revendication 1, caractérisé en ce que, pour la phase (a), on utilise un composé macromoléculaire insoluble dans les solvants organiques, en solution aqueuse et, pour la phase (b), une matière hydrophobe insoluble dans les milieux aqueux et contenue dans un solvant organique.

3. Procédé selon une des revendications 1 et 2, caractérisé en ce qu'on utilise un ou plusieurs composés macromoléculaires insolubles dans l'alcool pour la phase (a).

4. Procédé selon la revendication 3, caractérisé en ce qu'on utilise comme composé macromoléculaire insoluble dans l'alcool la gomme arabique, un dextrane, de l'hydroxyéthylamidon, des polysaccharides solubles dans les milieux aqueux ou des mélanges de ces substances.

5. Procédé selon la revendication 1 ou 2, caractérisé en ce qu'on utilise pour la phase (b) une matière hydrophobe soluble dans l'alcool et insoluble dans les milieux aqueux.

6. Procédé selon la revendication 5, caractérisé en ce qu'on utilise un polyorganosiloxane en tant que matière hydrophobe soluble dans l'alcool.

7. Procédé selon la revendication 6, caractérisé en ce qu'on utilise une solution d'un polyorganosiloxane dans un mélange de propanol/acide sulfurique.

8. Procédé selon la revendication 2, caractérisé en ce qu'on dégage les champs de réaction à l'aide d'un solvant aqueux.

9. Procédé selon la revendication 8, caractérisé en ce qu'on utilise comme milieu solvant aqueux un agent nettoyant aqueux basique.

10. Procédé selon une des revendications précédentes, caractérisé en ce qu'on traite la surface des champs de réaction dégagés à l'aide d'un milieu alcalin, tel qu'un hydroxyde de métal alcalin et/ou un hydroxyde de métal alcalino-terreux.

11. Procédé selon une des revendications précédentes, caractérisé en ce qu'on revêt les champs de réaction dégagés et éventuellement traités à l'aide d'un milieu alcalin, d'une façon connue en soi, à l'aide d'une ou plusieurs substances présentant de l'affinité pour les préparations à étudier.

12. Procédé selon la revendication 11, caractérisé en ce qu'on utilise comme substance possédant de l'affinité pour les préparations à étudier des protéines et/ou colorants basiques et/ou des substances connues en soi qui réagissent avec les molécules de la surface des cellules, telles que des anticorps.

13. Procédé selon la revendication 12, caractérisé en ce qu'on utilise comme substance possédant de l'affinité pour les préparations à étudier la poly-L-lysine, la spermidine, la poly-arginine, le bleu alcian ou des mélanges de ces substances.

14. Procédé selon une des revendications précédentes, caractérisé en ce qu'on utilise des porte-objets en verre ou matière plastique.

15. Procédé selon une des revendications précédentes, caractérisé en ce qu'on favorise l'adhérence de la substance possédant de l'affinité pour les préparations à étudier sur la surface du porte-objet par une liaison chimique et/ou on forme une couche plus épaisse de ces substances possédant de l'affinité par un dépôt multiple.
